# EUROPEAN PATENT SPECIFICATION

(11) **EP 3 731 575 B1**
(45) Date of publication and mention of the grant of the patent: **03.11.2021**
(21) Application number: 19171091.2
(22) Date of filing: 25.04.2019
(51) Int. Cl.: H04W 56/00

(54) **METHOD FOR CLOCK SYNCHRONIZATION OF PROTOCOLS, AND NETWORK, BASE STATION AND USER EQUIPMENTS**
VERFAHREN ZUR TAKTSYNCHRONISATION VON PROTOKOLLEN SOWIE NETZWERK, BASISSTATION UND BENUTZERGERÄTE
PROCÉDÉ DE SYNCHRONISATION D'HORLOGE DE PROTOCOLES ET RÉSEAU, STATION DE BASE ET ÉQUIPEMENTS UTILISATEUR

(43) Date of publication of application: 28.10.2020
(73) Proprietor: Deutsche Telekom AG, 53113 Bonn (DE)
(72) Inventor: COLOM IKUNO, Josep, 2100 Korneuburg (AT)
(74) Representative: Vossius & Partner Patentanwälte Rechtsanwälte mbB

(56) References cited:
- US-A1- 2019 059 066
- "IEEE1588 and Switches", INTERNET CITATION, 11 November 2005 (2005-11-11), pages 1-http://ww, XP002572809, Retrieved from the Internet: URL:www.ieee1588.com/Switches.htm [retrieved on 1077-11-11]

## Description

### Field of the invention

The invention relates to a method for enabling a cellular mobile network to achieve the necessary jitter and link symmetry requirements necessary for it to deliver clock synchronization protocols as an Over-The-Top (OTT) IP service.

### Background

Time synchronization among a set of devices is an important issue for any system that is low-latency and/or time-critical. Some examples of such systems are live audio processing, event timestamping, robot automation, electrical grid systems and indoor location systems.

Existing IP protocols allow the distribution of a highly-precise reference time from one or more timing references (usually denoted in literature as a "master clock") to other devices in a network. One of the most-commonly employed state of the art protocols is IEEE 1588v2, with NTP being used for less-precise synchronization.

In the prior art it is possible to distinguish the following types of clock synchronization.
i) Synchronization of the Base Station (BS) themselves: base stations are time-synchronized quite a long time in advance. For example, KR 1018990699 B1 relates to a method and apparatus for clock synchronization in a small cell. The synchronization of small cell is done at boot time from NTP/PTP server by increasing packet rate transmission. It also deals with RF frequency accuracy during handover. This document further relates to self-synchronization of base stations.
ii) Synchronization via Ethernet/cabled networks: this case relates to how to send such packets over a cellular network.

US 2014/254544 A1 relates to a method implemented by a base station of a grant-free uplink transmission scheme. The grant-free uplink transmission scheme defines a first contention transmission unit, CTU, access region in a time-frequency domain, defines a plurality of CTUs, defines a default CTU mapping scheme by mapping at least some of the plurality of CTUs to the first CTU access region, and defines a default user equipment, UE, mapping scheme by defining rules for mapping a plurality of UEs to the plurality of CTUs. In other words, this method discloses that the user is signaled to use a grant-free uplink transmission scheme as part of the defined method procedures.

In general, clock synchronization protocols require that the underlying network provides a network path between the users (slaves) and the master clock with the following characteristics: a) symmetrical delay, i.e. the same delay on both ways of the path and b) low jitter.

The current state of the art in mobile communication systems applies several methods to improve cell coverage, spectral efficiency, user throughput and/or spectral flexibility. These methods include:
- Carrier-Aggregation (CA): the sending and/or reception of user data via two or more component carriers (i.e. frequency spectrum portions). It serves as an inverse multiplexer at the radio access network of the traffic over multiple carriers.
- Coordinated MultiPoint (CoMP): simultaneous transmission or reception the same over more than one BS. In downlink, the data is sent to multiple sender BSs, simultaneously sent and received by the user. On the uplink side, the radio signal received from each receiving BS is then combined to reconstruct the original data.
- Dual Connectivity (DC): a user is connected on the data level to more than one BS simultaneously (may even be BSs of different systems, such as LTE and 5G NR).

All have in common that they depict a distribution-multiplexing-and-demultiplexing or demultiplexing-collection-and-multiplexing of the data flow. The transmission of data to/from several, potentially physically separated BSs, can introduce a variable delay between the point where the original IP packet arrives and the point where the IP packet arrives at its destination.

Current link adaptation protocols are designed to maximize throughput. For that the modulation and channel coding parameters used on the radio transmission are set to target a 10% radio packet error rate (BLER). For failed transmissions, packets are retransmitted (typically an HARQ retransmission mechanism). Retransmissions at the radio access layer are invisible at the IP level. Another example of prior art is US 2019/059066.

### Technical problem

In view of the above, current cellular mobile networks are not capable of fulfilling the symmetrical delay and low jitter requirements. Furthermore, tight integration and awareness with the clock synchronization protocols would couple the radio procedures to the actual payloads being transmitted, which would bring unwanted tight coupling between the radio procedures and the application layer (e.g. radio chips would need to process data at application layer).

It is an object of the present invention to provide a method for enabling a cellular mobile network to achieve the necessary jitter and link symmetry requirements necessary for it to deliver clock synchronization protocols and services with similar requirements as an Over-The-Top (OTT) IP service.

In other words, the problem to be solved by the present invention is to achieve an uplink and downlink with symmetric delay and minimum jitter so as to allow a functionally successful delivery of clock synchronization protocol IP packets. It implements a trade-off between spectral efficiency and flexibility so as to enable the delivery of IP clock synchronization protocol data.

### Summary of the invention

The above objects are achieved by the features of the independent claims.

According to a first aspect, the invention provides a method for clock synchronization of protocols in a network comprising a base station, BS, the BS comprising a BS scheduler, a user equipment, UE, and a master clock as an Over-the-Top, OTT, IP service on uplink and downlink channels. The method comprises the steps of:
a) enabling, by the network, one or more IP communication flows between interfaces of the master clock and the UE for IP time synchronization packets or packets with similar symmetrical delay and low jitter requirements;
b) receiving at the UE and the BS packets of these IP communication flows;
c) disabling, at the BS and the UE, the use of Carrier-Aggregation, CA, Coordinated MultiPoint, CoMP, and Dual Connectivity, DC, for data of these IP communication flows;
d) setting, at the BS and the UE, the target radio Block Error Rate, BLER, of the uplink and downlink channels to a value equal to or less than that of the IP communication flow's target packet loss rate;
e) calculating, at the BS and the UE, the radio packet size so as to ensure that each packet is transmitted over a single radio transmission;
f) signaling, from the network to the BS scheduler, a signal indicating to bypass radio scheduler queues;
g) receiving a signal at the BS scheduler to bypass radio scheduler queues;
h) signaling, from the BS to the UE, a signal indicating to utilize grant-free transmission on the uplink channel; and
i) receiving, at the UE, a signal indicating to utilize grant-free transmission on the uplink channel.

According to a second aspect, the invention provides a method for clock synchronization of protocols in a base station, BS, the BS comprising a BS scheduler, as an Over-the-Top, OTT, IP service on uplink and downlink channels. The method comprises the steps of:
b) receiving IP time synchronization packets or packets with similar symmetrical delay and low jitter requirements from one or more IP communication flows;
c) disabling the use of Carrier-Aggregation, CA, Coordinated MultiPoint, CoMP, and Dual Connectivity, DC, for data of these IP communication flows;
d) setting the target radio Block Error Rate, BLER, of the uplink and downlink channels to a value equal to or less than that of the IP communication flow's target packet loss rate;
e) calculating the radio packet size so as to ensure that each packet is transmitted over a single radio transmission;
g) receiving a signal indicating the BS scheduler to bypass radio scheduler queues; and
h) signaling to a User Equipment, UE, a signal indicating to utilize grant-free transmission on the uplink channel.

According to a further aspect, the invention provides a method for clock synchronization protocols in a User Equipment, UE, as an Over-the-Top, OTT, IP service on uplink and downlink channels. The method comprises the steps of:
b) receiving IP time synchronization packets or packets with similar symmetrical delay and low jitter requirements from one or more IP communication flows;
c) disabling the use of Carrier-Aggregation, CA, Coordinated MultiPoint, CoMP, and Dual Connectivity, DC, for data of these IP communication flows;
d) setting the target radio Block Error Rate, BLER, of the uplink and downlink channels to a value equal to or less than that of the IP communication flow's target packet loss rate;
e) calculating the radio packet size so as to ensure that each packet is transmitted over a single radio transmission; and
i) receiving a signal indicating to utilize grant-free transmission on the uplink channel.

In these aspects the IP communication flow's target packet loss rate may be an external parameter applied to the method.

According to a still further aspect, the invention provides a network comprising a base station, BS, the BS comprising a BS scheduler, a user equipment, UE, and a master clock, the network configured to use clock synchronization protocols as an Over-the-Top, OTT, IP service on uplink and downlink channels, wherein:
a) the network is configured to enable one or more IP communication flows between interfaces of the master clock and the UE for IP time synchronization packets or packets with similar symmetrical delay and low jitter requirements;
b) the UE and the BS are configured to receive packets of these IP communication flows;
c) the BS and the UE are configured to disable the use of Carrier-Aggregation, CA, Coordinated MultiPoint, CoMP, and Dual Connectivity, DC, for data of these IP communication flows;
d) the BS and the UE are configured to set the target radio Block Error Rate, BLER, of the uplink and downlink channels to a value equal to or less than that of the IP communication flow's target packet loss rate;
e) the BS and the UE are configured to calculate the radio packet size so as to ensure that each packet is transmitted over a single radio transmission;
f) the network is configured to signal the BS scheduler of the BS indicating to bypass radio scheduler queues;
g) the BS scheduler is configured to receive a signal to bypass radio scheduler queues;
h) the BS is configured to signal to the UE a signal indicating to utilize grant-free transmission on the uplink channel; and
i) the UE is configured to receive a signal indicating to utilize grant-free transmission on the uplink channel.

The IP communication flow's target packet loss rate may be an external parameter supplied to the network.

According to a still further aspect, the invention provides a base station, BS, the BS comprising a BS scheduler, configured to use clock synchronization protocols as an Over-the-Top, OTT, IP service on uplink and downlink channels, wherein:
b) the BS is configured to receive IP time synchronization packets or packets with similar symmetrical delay and low jitter requirements from one or more IP communication flows;
c) the BS is configured to disable the use of Carrier-Aggregation, CA, Coordinated MultiPoint, CoMP, and Dual Connectivity, DC, for data of these IP communication flows;
d) the BS is configured to set the target radio Block Error Rate, BLER, of the uplink and downlink channels to a value equal to or less than that of the IP communication flow's target packet loss rate;
e) the BS is configured to calculate the radio packet size so as to ensure that each packet is transmitted over a single radio transmission and not fragmented over time;
g) the BS scheduler is configured to receive a signal to bypass radio scheduler queues; and
h) the BS is configured to signal to a User Equipment, UE, indicating to utilize grant-free transmission on the uplink channel.

According to a still further aspect, the invention provides a user equipment, UE, configured to use clock synchronization protocols as an Over-the-Top, OTT, IP service on uplink and downlink channels, wherein:
b) the UE is configured to receive IP time synchronization packets or packets with similar symmetrical delay and low jitter requirements from one or more IP communication flows;
c) the UE is configured to disable the use of Carrier-Aggregation, CA, Coordinated MultiPoint, CoMP, and Dual Connectivity, DC, for data of these IP communication flows;
d) the UE is configured to set the target radio Block Error Rate, BLER, of the uplink and downlink channels to a value equal to or less than that of the IP communication flow's target packet loss rate;
e) the UE is configured to calculate the radio packet size so as to ensure that each packet is transmitted over a single radio transmission; and
i) the UE is configured to receive a signal indicating to utilize grant-free transmission on the uplink channel.

Other aspects, features, and advantages will be apparent from the summary above, as well as from the description that follows, including the figures and the claims.

### Brief description of the drawings

In the drawings:
FIG. 1 illustrates the clock synchronization distribution at IP level according to an exemplary embodiment.
FIG. 2 illustrates the network topology of the clock distribution network according to an exemplary embodiment.
FIG. 3 illustrates a method according to a preferred embodiment of the invention.
FIG. 4 illustrates the downlink and uplink depiction according to the preferred embodiment of the invention.

### Detailed description of the invention

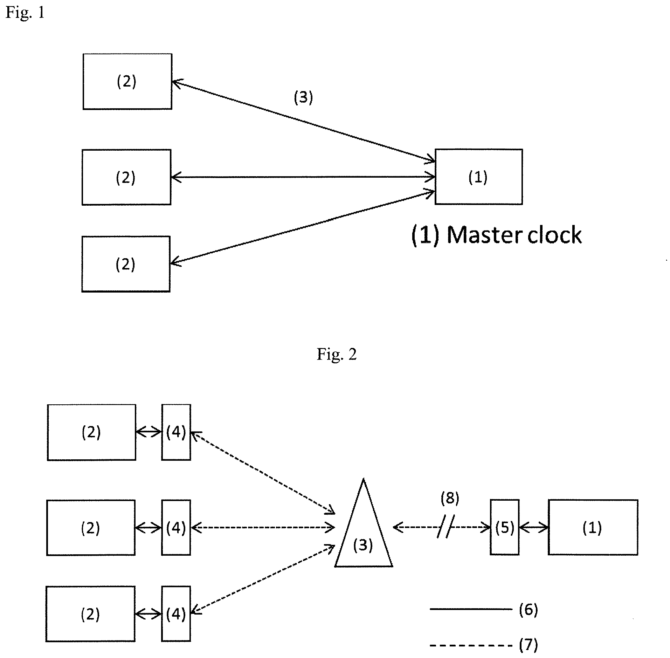

FIG. 1 illustrates a network topology of clock synchronization distribution at IP level according to an exemplary embodiment. Clock synchronization protocols are designed to distribute a reference clock timing reference from one or more master clocks 1 to the users, i.e. slaves 2. A user (slave) communicates via a two-way communication with the master clock in order to be able to estimate the end-to-end delay. Based on the measured time until a response is received, it is possible to estimate the offset that needs to be added to the clock relative to the master. This network topology, as seen in FIG. 1, is often referred to by the master and the slaves.

At the IP level, the BS is transparent. This means that the BS does not need to process Precision Time Protocol, PTP, packets (sometimes there are switches that are PTP-aware, typically called a "boundary clock", which take in the PTP messages and adjust some parameters on it such as, for example, the offset value). In other words, the Base Station, between the master clock and the UEs, is not visible in the IP packet flow of the IP time synchronization packets.

FIG. 2 illustrates a functional network topology according to an exemplary embodiment including the cellular network providing IP connectivity. On a physical topology level, the base station 3 provides connectivity to connected UEs. Each of the connected UEs comprise an interface 4 such as an Access Point Name, APN, or IP flow that can communicate via IP with other IP devices, such as the IP interface 5 of the master clock 1. While the IP interface 4 and the application 2 requiring the data flow (e.g. the software ultimately receiving the PTP packets and using them to synchronize its clock) may be a single physical device (e.g. UE) or separate ones (e.g. UE providing the IP flow to an external device), they serve two different functional purposes.

Other intermediate network elements 8 which may potentially introduce jitter and/or latency may be present. However, intermediate network elements are not considered for the purpose of this invention as described thereafter (e.g. a core network or a transport network providing physical connectivity between the base station and the master clock). From the application protocol layer 6 (depicted as a continuous line in FIG. 2), the delivery of the service via the mobile network 7 is transparent, i.e. the way the service is delivered is irrelevant to the application protocol layer 6.

According to a preferred embodiment, the invention provides a method for clock synchronization of protocols in a network comprising a base station, BS, the BS comprising a BS scheduler, a user equipment, UE, and a master clock as an Over-the-Top, OTT, IP service on uplink and downlink channels. The method comprises the following steps.

In step a), the network enables an IP communication between interfaces of the master clock and the UE. Thereafter, in step b), the UE and the master clock have an established path for the IP time synchronization packets such as, for example, Precision Time Protocol, PTP, packets or packets with similar requirements.

In step c), the BS and the UE disable the usage of Carrier-Aggregation (CA), Coordinated MultiPoint (CoMP) and Dual Connectivity (DC) for the data flows of IP clock synchronization protocol data.

In step d), the IP time synchronization packets flow target radio Block Error Rate (BLER) is set, in the UE and the BS, to a value equal or less that the one of the flow's target packet loss rate. By setting the target BLER at radio level to a value equal or smaller than the target error rate set for the transport of the clock synchronization protocol IP data at bearer level, the radio system targets avoiding packet retransmissions at the radio level. Analogous to a wired network, packet loss and retransmissions may still occur, albeit with a configurable target probability, that is the set BLER target value.

In step e), the radio packet size is calculated, both in the BS and the UE, in order to ensure that each packet is transmitted over a single radio transmission and not fragmented over time. In other words, in order to avoid an undeterministic wait time of the data at that the BS scheduler, it is necessary to map the IP packet to a given amount of physical radio resources: time, frequency and the transmission parameters the BS has to apply during this time and frequency. Among them is the possibility of fragmenting this transmission into several, discontinuous radio transmissions.

In step f), the BS scheduler is signaled, by the network, to bypass radio scheduler queues for the relevant packet flows, thereby avoiding to wait time at the BS.

In step g), the BS scheduler receives a signal to bypass radio scheduler queues for the relevant packet flows. Afterwards, the BS signals to the UE to utilize grant-free transmission on the uplink for the relevant packet flows. The grant-free transmission on the uplink avoids undeterministic time delays related to requesting and receiving a scheduling grant, and therefore saves the time of requesting/waiting for grant.

Lastly, in step i) the UE receives a signal indicating to utilize grant-free transmission on the uplink.

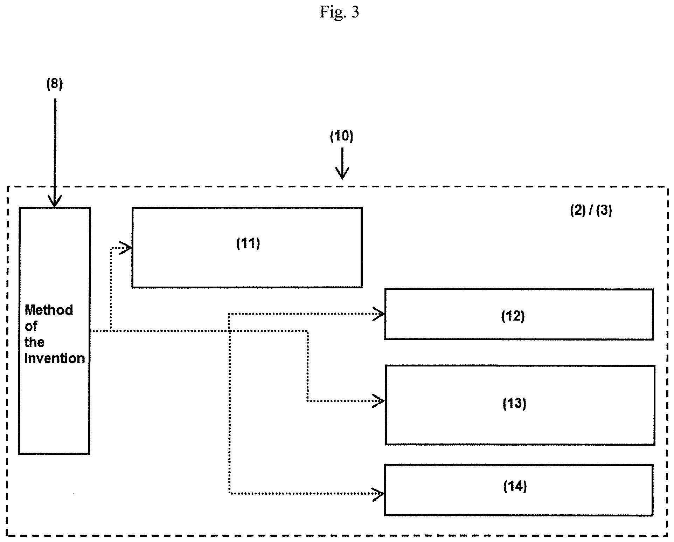

FIG. 3 illustrates the method according a preferred embodiment, in which IP time synchronization packets 10 arrive at the application 2 or UE and/or the BS 3. The method of the present invention applies the procedures specified for disabling of CA, CoMP, DC 11 (step c), link adaptation 12 (step d), non-discontinuous radio transmission 13 (step e) and radio scheduler queue bypassing 14 (steps f and g). The target packet error rate for clock synchronization data 8 is an external parameter supplied to this method.

Lastly, in steps h) and i), the BS signals to the UE to utilize grant-free uplink transmission for the relevant packet flows. Consequently, undeterministic delays caused by the uplink granting procedures can be avoided (current state of the art cellular mobile systems require that uplink transmissions be granted by the BS).

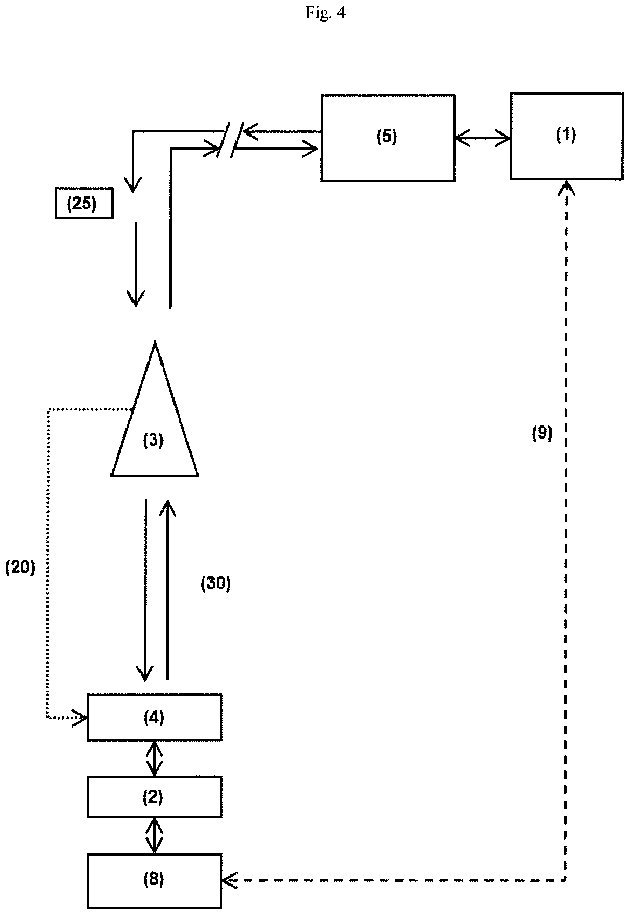

As part of the cellular mobile network, as shown in FIG. 4, according to the preferred embodiment, the base station 3 enables an IP communication between the interfaces 5 and 4 of the master clock 1 and the UE, which provides the IP data flow to the application 2. The base station 3 signals the UE to use grant-free uplink 20.

Accordingly, when the master clock 1 sends a data packet 25 to a UE or vice versa, downlink and uplink packets are sent with minimized delay and jitter 30. As a result, master clock and the UE can synchronize their clocks via an IP-based clock synchronization protocol 9.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for clock synchronization of protocols in a network comprising a base station, BS, the BS comprising a BS scheduler, a user equipment, UE, and a master clock as an Over-the-Top, OTT, IP service on uplink and downlink channels, the method comprising the steps of:
a) enabling, by the network, one or more IP communication flows between interfaces of the master clock and the UE for IP time synchronization packets or packets with similar symmetrical delay and low jitter requirements;
b) receiving at the UE and the BS packets of these IP communication flows;
c) disabling, at the BS and the UE, the use of Carrier-Aggregation, CA, Coordinated MultiPoint, CoMP, and Dual Connectivity, DC, for data of these IP communication flows;
d) setting, at the BS and the UE, the target radio Block Error Rate, BLER, of the uplink and downlink channels to a value equal to or less than that of the IP communication flow's target packet loss rate;
e) calculating, at the BS and the UE, the radio packet size so as to ensure that each packet is transmitted over a single radio transmission;
f) signaling, from the network to the BS scheduler, a signal indicating to bypass radio scheduler queues;
g) receiving a signal at the BS scheduler to bypass radio scheduler queues;
h) signaling, from the BS to the UE, a signal indicating to utilize grant-free transmission on the uplink channel; and
i) receiving, at the UE, a signal indicating to utilize grant-free transmission on the uplink channel.

2. A method for clock synchronization of protocols in a base station, BS, the BS comprising a BS scheduler, as an Over-the-Top, OTT, IP service on uplink and downlink channels, the method comprising the steps of:
b) receiving IP time synchronization packets or packets with similar symmetrical delay and low jitter requirements from one or more IP communication flows;
c) disabling the use of Carrier-Aggregation, CA, Coordinated MultiPoint, CoMP, and Dual Connectivity, DC, for data of these IP communication flows;
d) setting the target radio Block Error Rate, BLER, of the uplink and downlink channels to a value equal to or less than that of the IP communication flow's target packet loss rate;
e) calculating the radio packet size so as to ensure that each packet is transmitted over a single radio transmission;
g) receiving a signal indicating the BS scheduler to bypass radio scheduler queues; and
h) signaling to a User Equipment, UE, a signal indicating to utilize grant-free transmission on the uplink channel.

3. A method for clock synchronization protocols in a User Equipment, UE, as an Over-the-Top, OTT, IP service on uplink and downlink channels, the method comprising the steps of:
b) receiving IP time synchronization packets or packets with similar symmetrical delay and low jitter requirements from one or more IP communication flows;
c) disabling the use of Carrier-Aggregation, CA, Coordinated MultiPoint, CoMP, and Dual Connectivity, DC, for data of these IP communication flows;
d) setting the target radio Block Error Rate, BLER, of the uplink and downlink channels to a value equal to or less than that of the IP communication flow's target packet loss rate;
e) calculating the radio packet size so as to ensure that each packet is transmitted over a single radio transmission; and
i) receiving a signal indicating to utilize grant-free transmission on the uplink channel.

4. The method of any one of claims 1 to 3, wherein the IP communication flow's target packet loss rate is an external parameter applied to the method.

5. A network comprising a base station, BS, the BS comprising a BS scheduler, a user equipment, UE, and a master clock, the network configured to use clock synchronization protocols as an Over-the-Top, OTT, IP service on uplink and downlink channels, wherein:
a) the network is configured to enable one or more IP communication flows between interfaces of the master clock and the UE for IP time synchronization packets or packets with similar symmetrical delay and low jitter requirements;
b) the UE and the BS are configured to receive packets of these IP communication flows;
c) the BS and the UE are configured to disable the use of Carrier-Aggregation, CA, Coordinated MultiPoint, CoMP, and Dual Connectivity, DC, for data of these IP communication flows;
d) the BS and the UE are configured to set the target radio Block Error Rate, BLER, of the uplink and downlink channels to a value equal to or less than that of the IP communication flow's target packet loss rate;
e) the BS and the UE are configured to calculate the radio packet size so as to ensure that each packet is transmitted over a single radio transmission;
f) the network is configured to signal the BS scheduler of the BS indicating to bypass radio scheduler queues;
g) the BS scheduler is configured to receive a signal to bypass radio scheduler queues;
h) the BS is configured to signal to the UE a signal indicating to utilize grant-free transmission on the uplink channel; and
i) the UE is configured to receive a signal indicating to utilize grant-free transmission on the uplink channel.

6. The network of claim 5, wherein the IP communication flow's target packet loss rate is an external parameter supplied to the network.

7. A base station, BS, the BS comprising a BS scheduler, configured to use clock synchronization protocols as an Over-the-Top, OTT, IP service on uplink and downlink channels, wherein:
b) the BS is configured to receive IP time synchronization packets or packets with similar symmetrical delay and low jitter requirements from one or more IP communication flows;
c) the BS is configured to disable the use of Carrier-Aggregation, CA, Coordinated MultiPoint, CoMP, and Dual Connectivity, DC, for data of these IP communication flows;
d) the BS is configured to set the target radio Block Error Rate, BLER, of the uplink and downlink channels to a value equal to or less than that of the IP communication flow's target packet loss rate;
e) the BS is configured to calculate the radio packet size so as to ensure that each packet is transmitted over a single radio transmission and not fragmented over time;
g) the BS scheduler is configured to receive a signal to bypass radio scheduler queues; and
h) the BS is configured to signal to a User Equipment, UE, indicating to utilize grant-free transmission on the uplink channel.

8. A user equipment, UE, configured to use clock synchronization protocols as an Over-the-Top, OTT, IP service on uplink and downlink channels, wherein:
b) the UE is configured to receive IP time synchronization packets or packets with similar symmetrical delay and low jitter requirements from one or more IP communication flows;
c) the UE is configured to disable the use of Carrier-Aggregation, CA, Coordinated MultiPoint, CoMP, and Dual Connectivity, DC, for data of these IP communication flows;
d) the UE is configured to set the target radio Block Error Rate, BLER, of the uplink and downlink channels to a value equal to or less than that of the IP communication flow's target packet loss rate;
e) the UE is configured to calculate the radio packet size so as to ensure that each packet is transmitted over a single radio transmission;
i) the UE is configured to receive a signal indicating to utilize grant-free transmission on the uplink channel.

## Patentansprüche

1. Verfahren zur Taktsynchronisation von Protokollen in einem Netzwerk, das eine Basisstation, BS, umfasst, wobei die BS einen BS-Scheduler, ein Benutzergerät, UE, und einen Master-Takt als einen Over-the-Top-IP-Dienst, OTT-IP-Dienst, auf Uplink- und Downlink-Kanälen umfasst, wobei das Verfahren folgende Schritte umfasst:
a) Ermöglichen, durch das Netzwerk, von einem oder mehreren IP-Kommunikationsströmen zwischen Schnittstellen des Master-Takts und dem UE für IP-Zeitsynchronisationspakete oder Pakete mit ähnlichen Anforderungen in Bezug auf symmetrische Verzögerung und geringes Jitter;
b) Empfangen an dem UE und der BS von Paketen von diesen IP-Kommunikationsströmen;
c) Deaktivieren, an der BS und dem UE, der Nutzung von Trägeraggregation, CA, koordiniertem Mehrfachpunkt, CoMP, und dualer Konnektivität, DC, für Daten dieser IP-Kommunikationsströme;
d) Festlegen, an der BS und dem UE, der Zielfunk-Blockfehlerrate, BLER, der Uplink- und Downlink-Kanäle auf einen Wert, der so groß wie oder kleiner als jener der Zielpaketverlustrate des IP-Kommunikationsstroms ist;
e) Berechnen, an der BS und dem UE, der Funkpaketgröße, um sicherzustellen, dass jedes Paket über eine einzelne Funkübertragung übertragen wird;
f) Übermitteln, von dem Netzwerk zu dem BS-Scheduler, eines Signals, das anzeigt, Funkschedulerwarteschlangen zu umgehen;
g) Empfangen eines Signals an dem BS-Scheduler, um Funkschedulerwarteschlangen zu umgehen;
h) Übermitteln, von der BS an das UE, eines Signals, das anzeigt, eine autorisierungsfreie Übertragung auf dem Uplink-Kanal zu verwenden; und
i) Empfangen, an dem UE, eines Signals, das anzeigt, eine autorisierungsfreie Übertragung auf dem Uplink-Kanal zu verwenden.

2. Verfahren zur Taktsynchronisation von Protokollen in einer Basisstation, BS, wobei die BS einen BS-Scheduler umfasst, als einen Over-the-Top-IP-Dienst, OTT-IP-Dienst, auf Uplink- und Downlink-Kanälen, wobei das Verfahren folgende Schritte umfasst:
b) Empfangen von IP-Zeitsynchronisationspaketen oder Paketen mit ähnlichen Anforderungen in Bezug auf symmetrische Verzögerung und geringes Jitter von einem oder mehreren IP-Kommunikationsströmen;
c) Deaktivieren der Nutzung von Trägeraggregation, CA, koordiniertem Mehrfachpunkt, CoMP, und dualer Konnektivität, DC, für Daten dieser IP-Kommunikationsströme;
d) Festlegen der Zielfunkblockfehlerrate, BLER, der Uplink- und Downlink-Kanäle auf einen Wert, der so groß wie oder kleiner als jener der Zielpaketverlustrate des IP-Kommunikationsstroms ist;
e) Berechnen der Funkpaketgröße, um sicherzustellen, dass jedes Paket über eine einzelne Funkübertragung übertragen wird;
g) Empfangen eines Signals, das dem BS-Scheduler anzeigt, Funkschedulerwarteschlangen zu umgehen; und
h) Übermitteln an ein Benutzergerät, UE, eines Signals, das anzeigt, eine autorisierungsfreie Übertragung auf dem Uplink-Kanal zu verwenden.

3. Verfahren für Taktsynchronisationsprotokolle in einem Benutzergerät, UE, als ein Over-the-Top-IP-Dienst, OTT-IP-Dienst, auf Uplink- und Downlink-Kanälen, wobei das Verfahren folgende Schritte umfasst:
b) Empfangen von IP-Zeitsynchronisationspaketen oder Paketen mit ähnlichen Anforderungen in Bezug auf symmetrische Verzögerung und geringes Jitter von einem oder mehreren IP-Kommunikationsströmen;
c) Deaktivieren der Nutzung von Trägeraggregation, CA, einem koordinierten Mehrfachpunkt, CoMP, und dualer Konnektivität, DC, für Daten dieser IP-Kommunikationsströme;
d) Festlegen der Zielfunkblockfehlerrate, BLER, der Uplink- und Downlink-Kanäle auf einen Wert, der so groß wie oder kleiner als jener der Zielpaketverlustrate des IP-Kommunikationsstroms ist;
e) Berechnen der Funkpaketgröße, um sicherzustellen, dass jedes Paket über eine einzelne Funkübertragung übertragen wird; und
i) Empfangen eines Signals, das anzeigt, eine autorisierungsfreie Übertragung auf dem Uplink-Kanal zu verwenden.

4. Verfahren nach einem der Ansprüche 1 bis 3, wobei die Zielpaketverlustrate des IP-Kommunikationsstroms ein externer Parameter ist, der bei dem Verfahren angewendet wird.

5. Netzwerk, das eine Basisstation, BS, umfasst, wobei die BS einen BS-Scheduler, ein Benutzergerät, UE, und einen Master-Takt umfasst, wobei das Netzwerk konfiguriert ist, Taktsynchronisationsprotokolle als einen Over-the-Top-IP-Dienst, OTT-IP-Dienst, auf Uplink- und Downlink-Kanälen zu verwenden, wobei:
a) das Netzwerk konfiguriert ist, um einen oder mehrere IP-Kommunikationsströme zwischen Schnittstellen des Master-Takts und dem UE für IP-Zeitsynchronisationspakete oder Pakete mit ähnlichen Anforderungen in Bezug auf symmetrische Verzögerung und geringes Jitter zu ermöglichen;
b) das UE und die BS konfiguriert sind, um Pakete dieser IP-Kommunikationsströme zu empfangen;
c) die BS und das UE konfiguriert sind, um die Nutzung von Trägeraggregation, CA, koordiniertem Mehrfachpunkt, CoMP, und dualer Konnektivität, DC, für Daten dieser IP-Kommunikationsströme zu deaktivieren;
d) die BS und das UE konfiguriert sind, um die Zielfunkblockfehlerrate, BLER, der Uplink- und Downlink-Kanäle auf einen Wert festzulegen, der so groß wie oder kleiner als jener der Zielpaketverlustrate des IP-Kommunikationsstroms ist;
e) die BS und das UE konfiguriert sind, um die Funkpaketgröße zu berechnen, um sicherzustellen, dass jedes Paket über eine einzelne Funkübertragung übertragen wird;
f) das Netzwerk konfiguriert ist, um dem BS-Scheduler der BS ein Signal zu übermitteln, das anzeigt, Funkschedulerwarteschlangen zu umgehen;
g) der BS-Scheduler konfiguriert ist, um ein Signal zu empfangen, um Funkschedulerwarteschlangen zu umgehen;
h) die BS konfiguriert ist, um dem UE ein Signal zu übermitteln, das anzeigt, eine autorisierungsfreie Übertragung auf dem Uplink-Kanal zu verwenden; und
i) das UE konfiguriert ist, ein Signal zu empfangen, das anzeigt, eine autorisierungsfreie Übertragung auf dem Uplink-Kanal zu verwenden.

6. Netzwerk nach Anspruch 5, wobei die Zielpaketverlustrate des IP-Kommunikationsstroms ein externer Parameter ist, der dem Netzwerk geliefert wird.

7. Basisstation, BS, wobei die BS einen BS-Scheduler umfasst, der konfiguriert ist, um Taktsynchronisationsprotokolle als einen Over-the-Top-IP-Dienst, OTT-IP-Dienst, auf Uplink- und Downlink-Kanälen zu verwenden, wobei:
b) die BS konfiguriert ist, um IP-Zeitsynchronisationspakete oder Pakete mit ähnlichen Anforderungen in Bezug auf symmetrische Verzögerung und geringes Jitter von einem oder mehreren IP-Kommunikationsströmen zu empfangen;
c) die BS konfiguriert ist, um die Nutzung von Trägeraggregation, CA, koordiniertem Mehrfachpunkt, CoMP, und dualer Konnektivität, DC, für Daten dieser IP-Kommunikationsströme zu deaktivieren;
d) die BS konfiguriert ist, um die Zielfunkblockfehlerrate, BLER, der Uplink- und Downlink-Kanäle auf einen Wert festzulegen, der so groß wie oder kleiner als jener der Zielpaketverlustrate des IP-Kommunikationsstroms ist;
e) die BS konfiguriert ist, um die Funkpaketgröße zu berechnen, um sicherzustellen, dass jedes Paket über eine einzelne Funkübertragung übertragen wird und nicht im Verlauf der Zeit fragmentiert wird;
g) der BS-Scheduler konfiguriert ist, um ein Signal zu empfangen, um Funkschedulerwarteschlangen zu umgehen; und
h) die BS konfiguriert ist, um einem Benutzergerät, UE, ein Signal zu übermitteln, das anzeigt, eine autorisierungsfreie Übertragung auf dem Uplink-Kanal zu verwenden.

8. Benutzergerät, UE, das konfiguriert ist, um Taktsynchronisationsprotokolle als einen Over-the-Top-IP-Dienst, OTT-IP-Dienst auf Uplink- und Downlink-Kanälen zu verwenden, wobei:
b) das UE konfiguriert ist, um IP-Zeitsynchronisationspakete oder Pakete mit ähnlichen Anforderungen in Bezug auf symmetrische Verzögerung und geringes Jitter von einem oder mehreren IP-Kommunikationsströmen zu empfangen;
c) das UE konfiguriert ist, um die Nutzung von Trägeraggregation, CA, koordiniertem Mehrfachpunkt, CoMP, und dualer Konnektivität, DC, für Daten dieser IP-Kommunikationsströme zu deaktivieren;
d) das UE konfiguriert ist, um die Zielfunkblockfehlerrate, BLER, der Uplink- und Downlink-Kanäle auf einen Wert festzulegen, der so groß wie oder kleiner als jener der Zielpaketverlustrate des IP-Kommunikationsstroms ist;
e) das UE konfiguriert ist, um die Funkpaketgröße zu berechnen, um sicherzustellen, das jedes Paket über eine einzelne Funkübertragung übertragen wird;
i) das UE konfiguriert ist, um ein Signal zu empfangen, das anzeigt, eine autorisierungsfreie Übertragung auf dem Uplink-Kanal zu verwenden.

## Revendications

1. Procédé de synchronisation d'horloge de protocoles dans un réseau comprenant une station de base, BS, la BS comprenant un ordonnanceur de BS, un équipement utilisateur, UE, et une horloge maîtresse en tant que service IP par contournement, OTT, sur des canaux de liaison montante et de liaison descendante, le procédé comprenant les étapes de :
a) permission, par le réseau d'un ou de plusieurs flux de communications IP entre des interfaces de l'horloge maîtresse et de l'UE pour des paquets de synchronisation temporelle IP ou des paquets avec un délai symétrique similaire et de faibles exigences de gigue ;
b) réception au niveau de l'UE et de la BS de paquets de ces flux de communications IP;
c) désactivation, au niveau de la BS et de l'UE, de l'utilisation d'agrégation de porteuses, CA, de multipoint coordonné, CoMP, et de double connectivité, DC, pour des données de ces flux de communications IP ;
d) définition, au niveau de la BS et de l'UE, du taux d'erreurs sur les blocs, BLER, radio cible, des canaux de liaison montante et de liaison descendante à une valeur égale ou inférieure à celle du taux de perte de paquets cible du flux de communications IP ;
e) calcul, au niveau de la BS et de l'UE, de la taille de paquets radio de manière à garantir que chaque paquet soit transmis sur une seule transmission radio ;
f) signalisation, à partir du réseau de l'ordonnanceur de BS, d'un signal indiquant de contourner des files d'ordonnanceur radio ;
g) réception d'un signal au niveau de l'ordonnanceur de BS pour contourner des files d'ordonnanceur radio ;
h) signalisation, à partir de la BS vers l'UE, d'un signal indiquant d'utiliser une transmission sans autorisation sur le canal de liaison montante ; et
i) réception, au niveau de l'UE, d'un signal indiquant d'utiliser une transmission sans autorisation sur le canal de liaison montante.

2. Procédé de synchronisation d'horloge de protocoles dans une station de base, BS, la BS comprenant un ordonnanceur de BS, tels qu'un service IP par contournement, OTT, sur des canaux de liaison montante et de liaison descendante, le procédé comprenant les étapes de :
b) réception de paquets de synchronisation temporelle IP ou de paquets avec un délai symétrique similaire et de faibles exigences de gigue à partir d'un ou de plusieurs flux de communications IP ;
c) désactivation de l'utilisation d'agrégation de porteuses, CA, de multipoint coordonné, CoMP, et de double connectivité, DC, pour des données de ces flux de communications IP ;
d) définition du taux d'erreurs sur les blocs, BLER, radio cible, des canaux de liaison montante et de liaison descendante à une valeur égale ou inférieure à celle du taux de perte de paquets cible du flux de communications IP ;
e) calcul de la taille de paquets radio de manière à garantir que chaque paquet soit transmis sur une seule transmission radio ;
g) réception d'un signal indiquant à l'ordonnanceur de BS de contourner des files d'ordonnanceur radio ; et
h) signalisation à un équipement utilisateur, UE, d'un signal indiquant d'utiliser une transmission sans autorisation sur le canal de liaison montante.

3. Procédé pour protocoles de synchronisation d'horloge dans un équipement utilisateur, UE, tels qu'un service IP par contournement, OTT, sur des canaux de liaison montante et de liaison descendante, le procédé comprenant les étapes de :
b) réception de paquets de synchronisation temporelle IP ou de paquets avec un délai symétrique similaire et de faibles exigences de gigue à partir d'un ou de plusieurs flux de communication IP ;
c) désactivation de l'utilisation d'agrégation de porteuses, CA, de multipoint coordonné, CoMP, et de double connectivité, DC, pour des données de ces flux de communications IP ;
d) définition du taux d'erreurs sur les blocs, BLER, radio cible, des canaux de liaison montante et de liaison descendante à une valeur égale ou inférieure à celle du taux de perte de paquets cible du flux de communications IP ;
e) calcul de la taille de paquets radio de manière à garantir que chaque paquet soit transmis sur une seule transmission radio ; et
i) réception d'un signal indiquant d'utiliser une transmission sans autorisation sur le canal de liaison montante.

4. Procédé selon l'une quelconque des revendications 1 à 3, dans lequel le taux de perte de paquets cible de flux de communications IP est un paramètre externe appliqué au procédé.

5. Réseau comprenant une station de base, BS, la BS comprenant un ordonnanceur de BS, un équipement utilisateur, UE, et une horloge maîtresse, le réseau étant configuré pour utiliser des protocoles de synchronisation d'horloge tels qu'un service IP par contournement, OTT, sur des canaux de liaison montante et de liaison descendante, dans lequel :
a) le réseau est configuré pour permettre un ou plusieurs flux de communications IP entre des interfaces de l'horloge maîtresse et de l'UE pour des paquets de synchronisation temporelle IP ou des paquets avec un délai symétrique similaire et de faibles exigences de gigue ;
b) l'UE et la BS sont configurés pour recevoir des paquets de ces flux de communications IP ;
c) la BS et l'UE sont configurés pour désactiver l'utilisation d'agrégation de porteuses, CA, de multipoint coordonné, CoMP, et de double connectivité, DC, pour des données de ces flux de communications IP ;
d) la BS et l'UE sont configurés pour définir le taux d'erreurs sur les blocs, BLER, radio cible, des canaux de liaison montante et de liaison descendante à une valeur égale ou inférieure à celle du taux de perte de paquets cible du flux de communications IP ;
e) la BS et l'UE sont configurés pour calculer la taille de paquets radio de manière à garantir que chaque paquet soit transmis sur une seule transmission radio ;
f) le réseau est configuré pour signaler à l'ordonnanceur de BS la BS indiquant de contourner des files d'ordonnanceur radio ;
g) l'ordonnanceur de BS est configuré pour recevoir un signal pour contourner des files d'ordonnanceur radio ;
h) la BS est configurée pour signaler à l'UE un signal indiquant d'utiliser une transmission sans autorisation sur le canal de liaison montante ; et
i) l'UE est configuré pour recevoir un signal indiquant d'utiliser une transmission sans autorisation sur le canal de liaison montante.

6. Réseau selon la revendication 5, dans lequel le taux de perte de paquets cible du flux de communications IP est un paramètre externe fourni au réseau.

7. Station de base, BS, la BS comprenant un ordonnanceur de BS, configuré pour utiliser des protocoles de synchronisation d'horloge tels qu'un service IP par contournement, OTT, sur des canaux de liaison montante et de liaison descendante, dans laquelle :
b) la BS est configurée pour recevoir des paquets de synchronisation temporelle IP ou des paquets avec un délai symétrique similaire et de faibles exigences de gigue à partir d'un ou de plusieurs flux de communications IP ;
c) la BS est configurée pour désactiver l'utilisation d'agrégation de porteuses, CA, de multipoint coordonné, CoMP, et de double connectivité, DC, pour des données de ces flux de communications IP ;
d) la BS est configurée pour définir le taux d'erreurs sur les blocs, BLER, radio cible, des canaux de liaison montante et de liaison descendante à une valeur égale ou inférieure à celle du taux de perte de paquets cible du flux de communications IP ;
e) la BS est configurée pour calculer la taille de paquets radio de manière à garantir que chaque paquet soit transmis sur une seule transmission radio ;
g) l'ordonnanceur de BS est configuré pour recevoir un signal pour contourner des files d'ordonnanceur radio ; et
h) la BS est configurée pour signaler à un équipement utilisateur, UE, d'utiliser une transmission sans autorisation sur le canal de liaison montante.

8. Équipement utilisateur, UE, configuré pour utiliser des protocoles de synchronisation d'horloge tels qu'un service IP par contournement, OTT, sur des canaux de liaison montante et de liaison descendante, dans lequel :
b) l'UE est configurée pour recevoir des paquets de synchronisation temporelle IP ou des paquets avec un délai symétrique similaire et de faibles exigences de gigue à partir d'un ou de plusieurs flux de communications IP ;
c) l'UE est configurée pour désactiver l'utilisation d'agrégation de porteuses, CA, de multipoint coordonné, CoMP, et de double connectivité, DC, pour des données de ces flux de communications IP ;
d) l'UE est configurée pour définir le taux d'erreurs sur les blocs, BLER, radio cible, des canaux de liaison montante et de liaison descendante à une valeur égale ou inférieure à celle du taux de perte de paquets cible du flux de communications IP ;
e) l'UE est configurée pour calculer la taille de paquets radio de manière à garantir que chaque paquet soit transmis sur une seule transmission radio ;
i) l'UE est configurée pour recevoir un signal indiquant d'utiliser une transmission sans autorisation sur le canal de liaison montante.
